# EUROPEAN PATENT APPLICATION

(11) **EP 3 054 524 A1**
(43) Date of publication of application: **10.08.2016**
(21) Application number: 13894948.2
(22) Date of filing: 03.10.2013
(51) Int. Cl.: H01M 10/60

(54) **ELECTRICITY STORAGE DEVICE**

(71) Applicant: Hitachi Automotive Systems, Ltd., Hitachinaka-shi, Ibaraki 312-8503 (JP)
(72) Inventor: YAMAMOTO, Takatoshi, Hitachinaka-shi Ibaraki 312-8505 (JP)
(74) Representative: Beetz & Partner mbB
(86) International application number: PCT/JP2013/076963
(87) International publication number: WO 2015/049762

(57) **Abstract**

A power storage module 40 having a plurality of secondary battery cells 101 arranged in a plurality of stages is housed inside a storage case 2. A refrigerant introducing port 116 and a refrigerant lead-out port 118 are provided in a holding case 111 of the power storage module 40 so as to be arranged in a longitudinal direction of the secondary battery cells. An inlet 22 and an outlet 32 are formed in the storage case 2 so as to correspond to the refrigerant introducing port 116 and refrigerant lead-out port 118. An attachment 150 having a plurality of circulation openings 151 is interposed between the inlet 22 and refrigerant introducing port 116. An area of each circulation opening 151 is smaller than an area of the inlet 22 and that of the refrigerant introducing port 116.

## Description

### Technical Field

The present invention relates to a power storage device that houses a power storage module and, more particularly, to a power storage device provided with a cooling function of the power storage module.

### Background Art

A power storage device is mounted in an electric car, a hybrid car, and the like as a power source. The power storage device houses a plurality of power storage modules each having a plurality of secondary battery cells such as lithium-ion secondary battery cells.

The power storage device generates heat upon charging or discharging. The power storage device houses a number of secondary battery cells, so that a temperature difference may occur among the secondary battery cells. The temperature difference among the secondary battery cells may affect cell performance and damage the battery cell and, thus, it is necessary to adopt a cooling structure capable of preventing the temperature difference from occurring as much as possible.

There is known a power storage device provided with a cooling structure described below.

A storage case has a cooling air introducing port and a cooling air lead-out port at one side and at a side opposite to the one side, respectively and houses, inside thereof, a plurality of power storage modules. Further, a cooling air control plate having a plurality of slits is provided between the cooling air introducing port of the storage case and a most upstream side power storage module.

In the above cooling structure, a vortex flow occurs in the cooling air at a periphery of the plurality of slits of the cooling air control plate, making density of the cooling air irregular, with the result that strength, speed, and the like of the air flow change with time. Thus, from a big perspective, even cooling is achieved with elapse of time (see, for example, PTL 1).

### Citation List

### Patent Literature

PTL 1: Publication of Patent No. 2010-262758

### Summary of Invention

### Technical Problem

In the above PTL 1, the cooling air that has passed through the cooling air control plate cools an outer peripheral surface of the power storage modules and is discharged through the cooling air lead-out port. In this process, the cooling air does not directly cool the secondary battery cells in each of the power storage modules.

Thus, in a configuration where a plurality of stages of the secondary battery cells are arranged in each of the power storage modules, a large temperature difference may occur between an inside secondary battery cell and an outside secondary battery cell.

### Solution to Problem

According to a first aspect of the present invention, a a power storage device includes: a power storage module having a storage module case and a plurality of power storage elements arranged, in the storage module case, in a plurality of stages each including a plurality of the power storage elements, the storage module case having a refrigerant introducing port formed at one of a pair of side portions arranged in a longitudinal direction of the power storage elements and a refrigerant lead-out port at the other one of the pair of side portions; a storage case housing the power storage module and having an inlet communicating with the refrigerant introducing port and an outlet communicating with the refrigerant lead-out port; and a refrigerant control mechanism disposed at an outside of at least one of the pair of side portions of the storage module case in which the refrigerant introducing port is formed and the other one of the pair of side portions in which the refrigerant lead-out port is formed, wherein (i) when being disposed outside the refrigerant introducing port, the refrigerant control mechanism has circulation openings whose number is larger than the number of the refrigerant introducing ports, and an area of each circulation openings is smaller than the area of the refrigerant introducing port, and (ii) when being disposed outside the refrigerant lead-out port, the refrigerant control mechanism has circulation openings whose number is larger than the number of the refrigerant lead-out ports, and an area of each circulation openings is smaller than the area of the refrigerant lead-out port.

According to a second aspect of the present invention, in the power storage device according to the first aspect, the number of stages of the power storage elements arranged in the storage module case is preferably smaller than the number of power storage devices arranged in each stage.

According to a third aspect of the present invention, in the power storage device according to the second aspect, the refrigerant control mechanism may be a plate-like member disposed between the storage module case and storage case.

According to a fourth aspect of the present invention, in the power storage device according to the second aspect, the refrigerant control mechanism may be a plate-like member disposed outside the storage case.

According to a fifth aspect of the present invention, in the power storage device according to the third aspect or fourth aspect, the circulation openings of the refrigerant circulation control mechanism preferably satisfy one of the following conditions (i) and (ii):
(i) when the refrigerant control mechanism is disposed outside the refrigerant introducing port, the number of the circulation openings is larger than the number of the inlets, and an area of each circulation opening is smaller than the area of the inlet;
(ii) when the refrigerant control mechanism is disposed outside the refrigerant lead-out port, the number of the circulation openings is larger than the number of the outlets, and an area of each circulation opening is smaller than the area of the outlet.

According to a sixth aspect of the present invention, in the power storage device according to the second aspect, the refrigerant circulation control mechanism may be formed in the storage case.

According to a seventh aspect of the present invention, in the power storage device according to the first aspect, the power storage element may be a cylindrical secondary battery cell.

According to an eighth aspect of the present invention, in the power storage device according to the seventh aspect, at least one circulation opening is preferably disposed so as to correspond to each of the plurality of power storage elements arranged in one stage.

According to a ninth aspect of the present invention, in the power storage device according to the seventh aspect, each circulation opening may be disposed over the plurality of power storage elements arranged in one stage.

According to a tenth aspect of the present invention, in the power storage device according to the first aspect, the plurality of power storage modules are provided inside the storage case, and the refrigerant circulation control mechanism is provided for each of the plurality of power storage modules and, in this configuration, at least one of a shape, an area, and an arrangement of the circulation openings of at least one refrigerant circulation control mechanism may be different from those of the circulation openings of another refrigerant circulation control mechanism.

According to an eleventh aspect of the present invention, in the power storage device according to the tenth aspect, the storage case has an inlet or an outlet of refrigerant and, in this configuration, a total area of the circulation openings of the refrigerant circulation control mechanism housed at a location close to the inlet side or outlet side is preferably smaller than a total area of the circulation openings of the refrigerant circulation control mechanism housed at a location distant from the inlet side or outlet side.

### Advantageous Effects of Invention

According to the present invention, refrigerant is introduced inside the power storage module through the refrigerant introducing port, passes through a gap between the secondary battery cells arranged in a plurality of stages in the power storage module, and is led outside the power storage module through the refrigerant lead-out port. The refrigerant circulation control mechanism having the circulation openings is disposed outside the refrigerant introducing port or refrigerant lead-out port. The refrigerant is substantially equally distributed by the refrigerant circulation control mechanism, so that the power storage elements arranged in a plurality of stages in the power storage module can be equally cooled. This can reduce a temperature difference among the power storage elements.

### Brief Description of Drawings

[FIG. 1] FIG. 1 is a perspective view illustrating an outer appearance of an embodiment of a power storage device according to the present invention.
[FIG. 2] FIG. 2 is an exploded perspective view of the power storage device illustrated in FIG. 1.
[FIG. 3] FIG. 3 is an exploded perspective view illustrating a part of the power storage device illustrated in FIG. 2 as viewed from a rear surface side thereof.
[FIG. 4] FIG. 4 is an exploded perspective view of the power storage device illustrated in FIG. 2 in a state where power storage modules are removed from the power storage device.
[FIG. 5] FIG. 5 is an exploded perspective view illustrating the power storage module illustrated in FIG. 2 and an attachment (refrigerant circulation control mechanism).
[FIG. 6] FIG. 6 is an exemplary perspective view illustrating an outer appearance of the power storage module illustrated in FIG. 5.
[FIG. 7] FIG. 7(a) is an exploded perspective view for explaining a structure of the power storage module illustrated in FIG. 5, and FIG. 7(b) is an exemplary perspective view illustrating an outer appearance of the power storage module.
[FIG. 8] FIG. 8 is an exploded perspective view illustrating the power storage module illustrated in FIG. 5.
[FIG. 9] FIG. 9 is an exemplary cross-sectional view illustrating an embodiment of the power storage device according to the present invention.
[FIG. 10] FIG. 10(a) and 10(b) are views each illustrating a modification of the attachment.
[FIG. 11] FIG. 11 is an exploded perspective view illustrating a main part of a second embodiment of a power storage device according to the present invention.
[FIG. 12] FIG. 12 is an exploded perspective view illustrating a main part of a third embodiment of a power storage device according to the present invention.
[FIG. 13] FIG. 13 is an exemplary cross-sectional view illustrating a fourth embodiment of a power storage device according to the present invention.

### Description of Embodiments

### First Embodiment

### [Entire Configuration of Power Storage Device]

An embodiment of a power storage device according to the present invention will be described below with reference to the drawings.

A power storage device according to the present embodiment is applied to an in-vehicle power supply in a motor drive system for an electric vehicle, for example, an electric car. The electric car conceptually includes a hybrid car provided with an internal combustion engine and an electric motor as a drive source for the vehicle and a pure electric car provided with only an electric motor as a drive source.

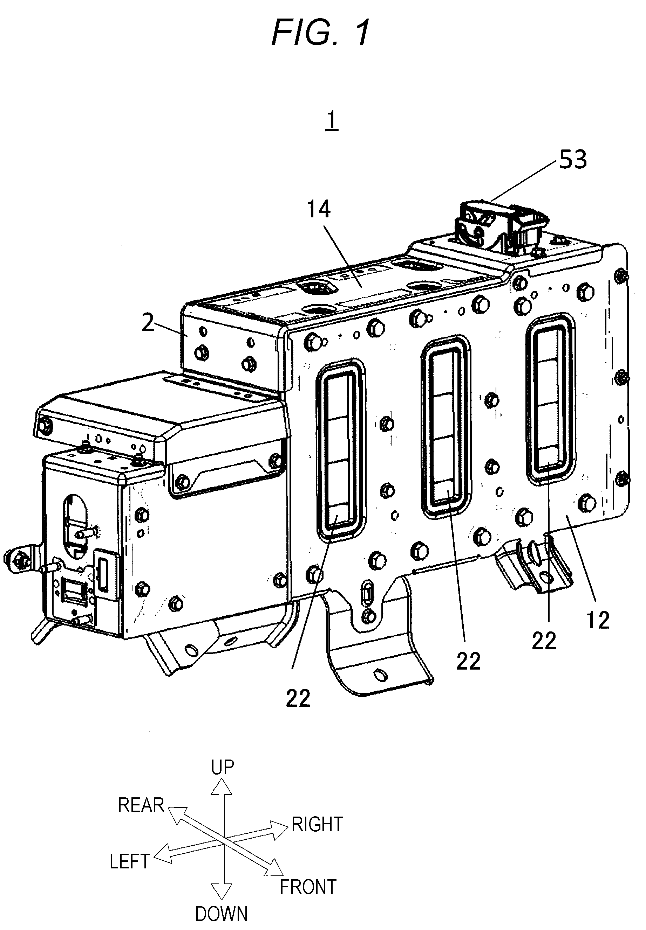

First, an entire configuration of the power storage device will be described using FIGS. 1 to 4.

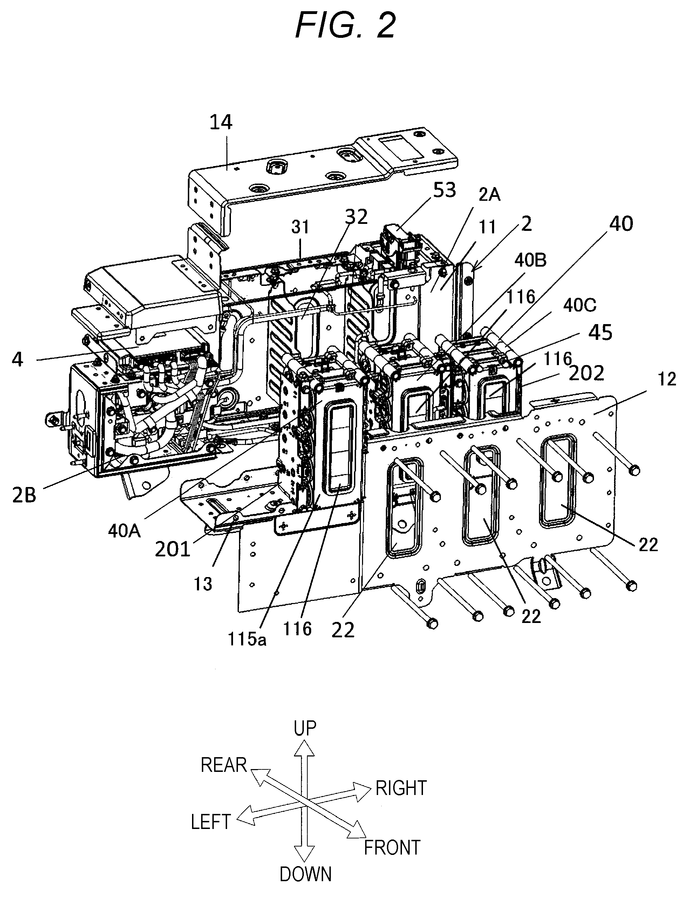

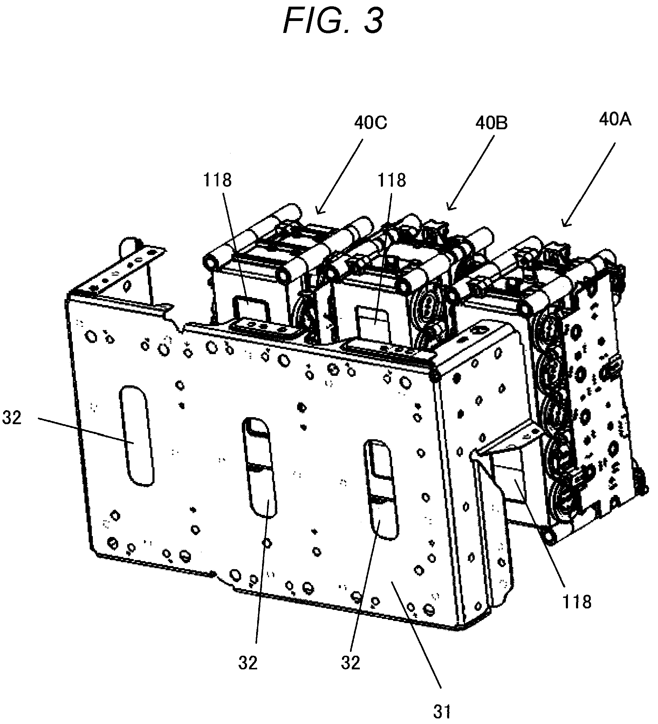

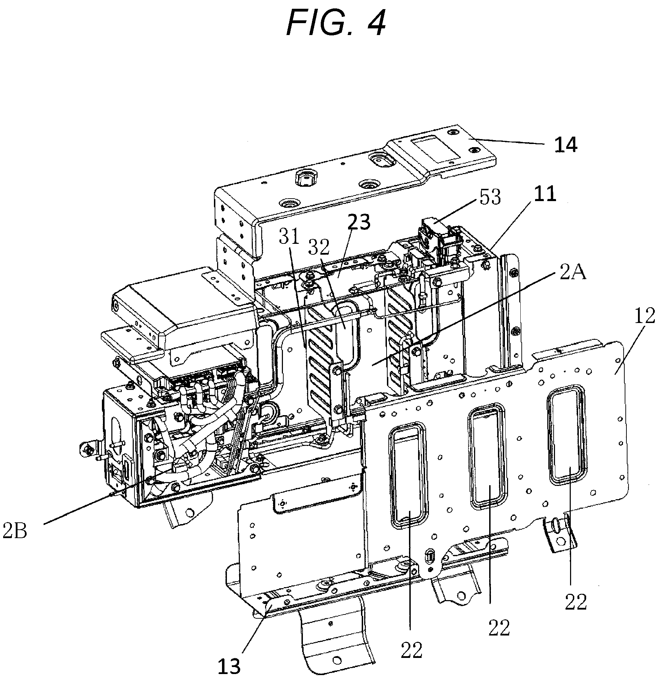

FIG. 1 is a perspective view illustrating an outer appearance of an embodiment of the power storage device according to the present invention, FIG. 2 is an exploded perspective view of the power storage device illustrated in FIG. 1, FIG. 3 is an exploded perspective view illustrating a part of the power storage device illustrated in FIG. 2 as viewed from a rear surface side thereof, and FIG. 4 is an exploded perspective view of the power storage device illustrated in FIG. 2 in a state where power storage modules are removed from the power storage device.

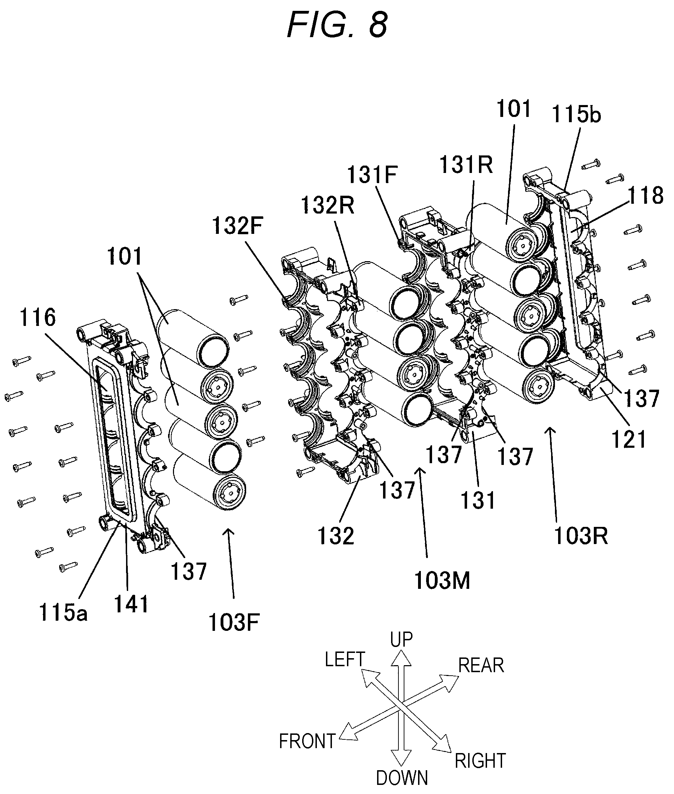

A power storage device 1 is, for example, a lithium-ion battery device and houses, in a storage case 2, a plurality of power storage modules 40 each having a plurality of secondary battery cells 101 (see FIG. 8: power storage elements) such as lithium-ion secondary battery cells.

The storage case 2 has a shape obtained by a small rectangular parallelepiped is connected to a left side of a large rectangular parallelepiped.

Hereinafter, a front-rear direction, a left-right direction, and an up-down direction are indicated by arrows illustrated in FIGS. 1 and 2.

The storage case 2 is constituted by a main case 11, a side cover 12, an under cover 13, and a top cover 14. The main case 11 has a side wall 31 (see FIG. 3) at a rear side thereof and has a frame shape in which upper, lower, and front sides thereof are opened. The main case 11, side cover 12, under cover 13, and top cover 14 are each formed by pressing a metal thin plate.

The side cover 12 is disposed opposite to the side wall 31 of the main case 11 so as to close a front opening of the main case 11. The side wall 31 constitutes a rear wall, and the side cover 12 constitutes a front wall. The under cover 13 closes a lower opening of the main case 11, and the top cover 14 closes an upper opening of the main case 11. The side cover 12, under cover 13, and top cover 14 are each fixed to the main case 11 by a fastening member such as a bolt, thereby forming a space for housing electronic components.

There are formed, inside the storage case 2 formed by the main case 11, side cover 12, under cover 13, and top cover 14, a power storage module housing area 2A that houses the power storage modules 40 and a control unit housing area 2B that houses a control unit 4.

In the power storage module housing area 2A, a plurality of (in the present embodiment, three) power storage modules 40A to 40C are arranged. The power storage modules 40A to 40C each have a rectangular parallelepiped block shape. In the present embodiment, the power storage modules 40A to 40C are adjacently arranged in parallel in such a way that a longitudinal side of each module extends in the up-down direction in the main case 11. The power storage modules 40A, 40B, and 40C are arranged in this order in a direction separating away from the control unit housing area 2B, i.e., from the left to the right in FIG. 2.

The power storage modules 40A to 40C each have, at its front side, a refrigerant introducing port 116. Further, the power storage modules 40A to 40C each have, at its rear side, a refrigerant lead-out port 118 (see FIG. 3).

The side cover 12 has inlet (inflow port) 22 formed so as to be opposed to the refrigerant introducing port 116 of each power storage module 40. Further, the side wall 31 of the main case 11 has an outlet (outflow port) 32 formed so as to be opposed to the refrigerant lead-out port 118 of each of the power storage modules 40A to 40C.

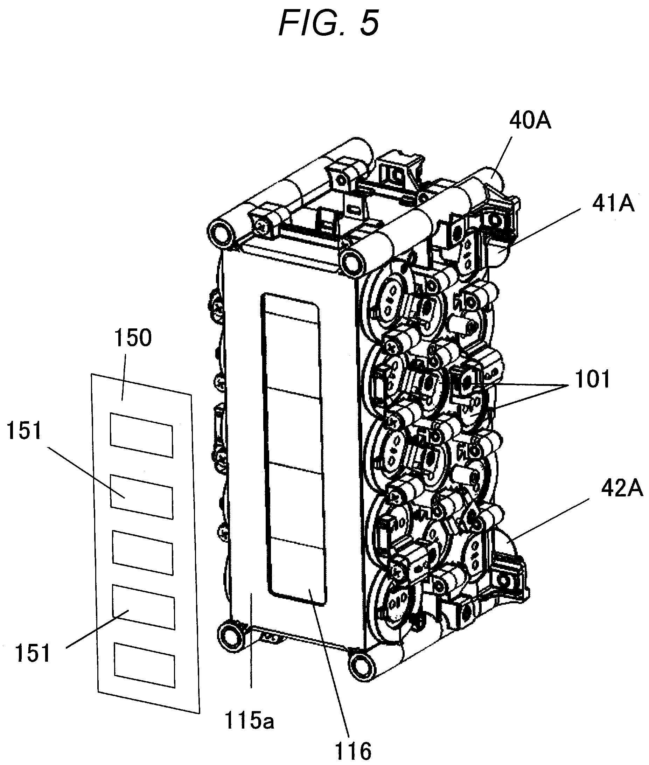

Although not illustrated in FIGS. 2 and 4, as described later, a refrigerant control mechanism that controls circulation of refrigerant such as air, i.e., an attachment 150 (see FIG. 5) is provided between the side cover 12 and each of the power storage modules 40A to 40C.

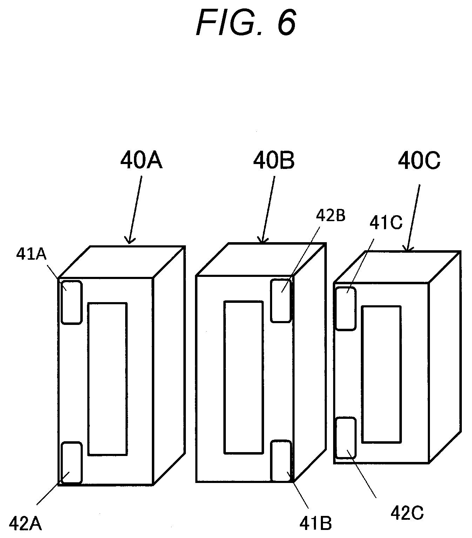

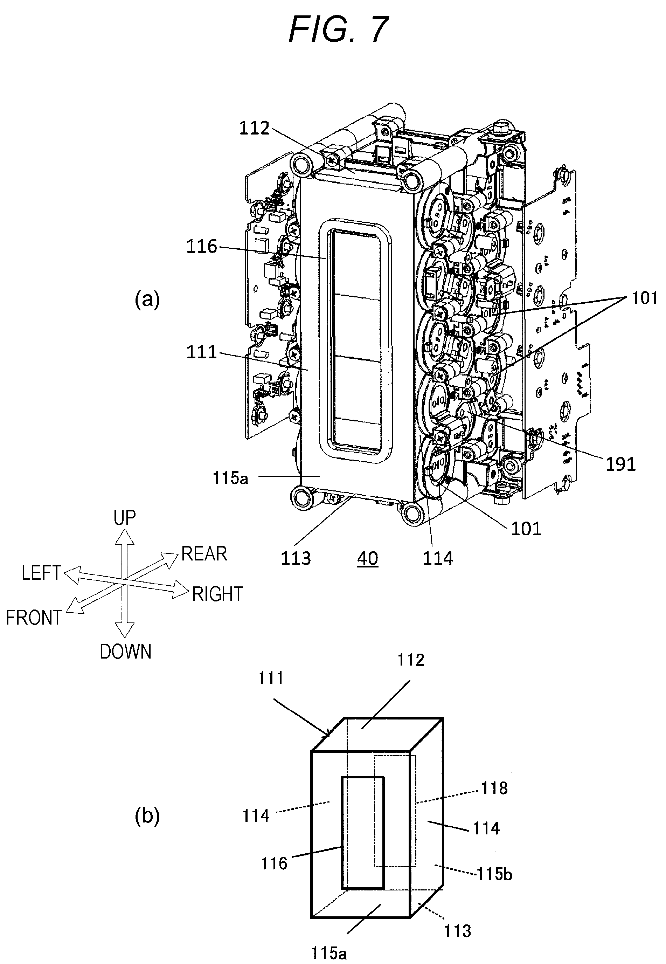

FIG. 5 is an exploded perspective view illustrating the power storage module illustrated in FIG. 2 and attachment, and FIG. 6 is an exemplary perspective view illustrating an outer appearance of the power storage module illustrated in FIG. 5. FIG. 7(a) is an exploded perspective view for explaining a structure of the power storage module illustrated in FIG. 5, and FIG. 7(b) is an exemplary perspective view illustrating an outer appearance of the power storage module.

As illustrated in the exemplary view of FIG. 6, the power storage modules 40A to 40C have, at their both end portions in a longitudinal (up-down) direction thereof, positive terminals 41A to 41C and negative terminals 42A to 42C.

The power storage modules 40A and 40B or the power storage modules 40B and 40 can be electrically connected or disconnected by an SD (service disconnect) switch 53. The SD switch 53 is a safety device provided for securing safety at maintenance inspection of the power storage device 1. The SD switch 53 is constituted of an electric circuit in which a switch and a fuse are electrically connected in series and is operated by a serviceman at maintenance inspection.

The six external terminals from the positive terminal 41A of the power storage module 40A to the negative terminal 42C of the power storage module 40C are connected to one another by a harness such that the power storage modules 40A to 40C are connected in series, as well as, to a not illustrated external terminal of the control unit 4. The power storage modules 40A to 40C each have two voltage detection substrates 201 and 202 (see FIG. 2) disposed along longitudinal direction (up-down direction) sides, respectively, and a temperature detection sensor 45 (see FIG. 2). The voltage detection substrates 201 and 202 are connected to a controller (not illustrated) of the control unit 4 by not illustrated voltage detection lines, and the temperature detection sensor 45 is connected to the controller by a not illustrated sensor line.

The power storage modules 40A to 40C have the same structure, so hereinafter a single power storage module (referred to as "power storage module 40") will be described as a representative of the power storage modules 40A to 40C.

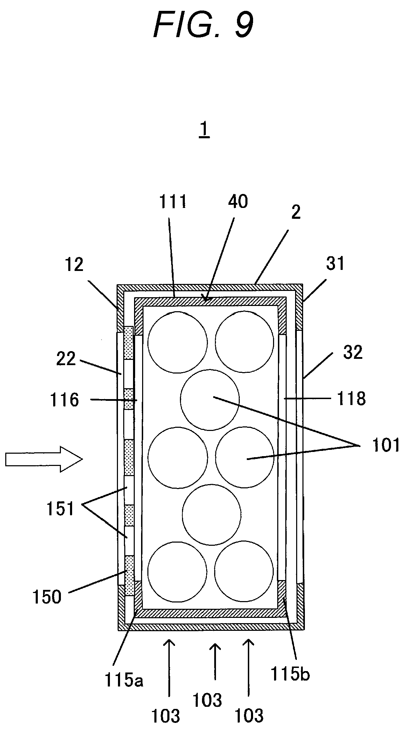

As illustrated in FIG. 7(a), the power storage module 40 holds a plurality of secondary battery cells 101 in a storage module case, i.e., a holding case 111. In the present embodiment, as described later, the secondary battery cells 101 are arranged in three stages in the front-rear direction. As illustrated in FIG. 7(b), the holding case 111 has a hexahedron shape. The holding case 111 has upper and lower surfaces 112 and 113 which are separated from and opposed to each other in the up-down direction and a pair of vertical wall surfaces 114 which are separated from and opposed to each other in the left-right direction and each connect short sides of the upper and lower surfaces 112 and 113. Further, the holding case 111 is formed of, for example, a resin and has a front end surface 115a and a rear end surface 115b (see FIG. 9) which are separated from and opposed to each other in the front-rear direction and each connect long sides of the upper surface 112, the lower surface 113, and the pair of vertical wall surfaces 114.

The above-mentioned refrigerant introducing port 116 is formed in the front end surface 115a of the holding case 111. Further, the above-mentioned refrigerant lead-out port 118 is formed in the rear end surface 115b of the holding case 111. FIG. 7(b) is an exemplary view for illustrating a positional relationship between the refrigerant introducing port 116 and refrigerant lead-out port 118. Refrigerant such as air flows in the holding case 111 through the refrigerant introducing port 116, circulates inside the holding case 111 in the front-rear direction, and flows out through the rear side refrigerant lead-out port 118.

In a state where the power storage module 40 is housed in the storage case 2, the front end surface 115a of the holding case 111 is disposed opposite to the side cover 12 and, thus, the refrigerant introducing port 116 of the front end surface 115a is opposed to the inlet 22 of the side cover 12. Further, the rear end surface 115b of the holding case 111 of the power storage module 40 is disposed opposite to the side wall 31 and, thus, the refrigerant lead-out port 118 of the rear end surface 115b is opposed to the outlet 32 of the side wall 31.

As illustrated in FIG. 9, in the storage case 2, an attachment 150 to be described later is interposed between the side cover 12 and front end surface 115a of the holding case 111. The side wall 31 of the main case 11 and rear end surface 115b of the holding case 111 are fixed closely to each other through a not illustrated insertion member. The refrigerant introducing port 116 of the front end surface 115a of the holding case 111 communicates with the inlet 22 of the side cover 12, and the refrigerant lead-out port 118 of the rear end surface 115b of the holding case 111 directly communicates with the outlet 32 of the side wall 31 of the main case 11. In this state, the side cover 12 and front end surface 115a of the holding case 111 are in tight contact with each other through the attachment 150, and the side wall 31 of the main case 11 and rear end surface 115b are in tight contact with each other, whereby leakage of gas from the storage case 2 can be prevented.

Refrigerant such as air taken in through a not illustrated duct passes through the inlet 22 of the storage case 2 and refrigerant introducing port 116 to be introduced in the power storage module 40. Then, the refrigerant passes through the refrigerant lead-out port 118 to be discharged outside the power storage module 40 through the outlet 32 of the storage case 2. That is, the refrigerant directly contacts and cools the plurality of secondary battery cells 101 arranged inside the power storage module 40.

A space formed at an upper portion between an upper portion of an area between the front end surface 115a of the holding case 111 and inlet 22 of the side cover 12 and a space formed at an upper portion of an area between the rear end surface 115b of the holding case 111 and outlet 32 of the side wall 31 of the main case 11 are used as a wiring passage, and wirings connecting the power storage modules 40A to 40C and control unit 4 are routed along the wiring passage. The wirings routed along the wiring passage include a harness for connecting the negative terminal 42C of the power storage module 40C and control unit 4, a voltage detection line for transmitting a voltage detection signal from each of the power storage modules 40A to 40C to the control unit 4, a sensor line for transmitting a detection signal from the temperature detection sensor 45 to the control unit 4, and the like.

### [Power Storage Module]

In the present embodiment, the power storage modules 40A and 40B each have 14 secondary battery cells 101, and the power storage module 40C has 12 secondary battery cells.

The 14 secondary battery cells 101 are arranged inside each of the power storage modules 40A and 40B. A positive electrode and a negative electrode of each secondary battery cell 101 are connected to opposite polarities (a negative electrode and a positive electrode), respectively, of the adjacent secondary battery cell 101 by a conductive member 191 (see FIG. 7(a)), and all 14 secondary battery cells 101 are connected in series. Similarly, although not illustrated, in the power storage module 40C, all 12 secondary battery cells 101 are connected in series. External lead-out terminals are connected respectively to the first secondary battery cell 101 and last secondary battery cell 101 of each of the power storage modules 40A to 40C and, respectively, to the positive terminal (41A to 41C) and negative terminal (42A to 42C) illustrated in FIGS. 5 and 6.

The secondary battery cell 101 is a cylindrical lithium-ion secondary battery and has a configuration in which components such as a battery element and a safety valve are housed inside a battery case into which an electrolyte is injected. The safety valve on the positive side is a cleavage valve that cleaves when a pressure inside the battery case becomes a predetermined pressure due to abnormality such as overcharge. The safety valve functions as a fuse mechanism that blocks electrical connection between a battery lid and a positive side battery element by cleavage and functions as a decompression mechanism that emits gas generated inside the battery case, i.e., mist carbon dioxide gas (jetted matters) including electrolytic solution, to outside the battery case.

The negative side of the battery case is also provided with a cleavage groove, which cleaves when the pressure inside the battery case becomes a predetermined pressure due to abnormality such as overcharge. This allows the gas generated inside the battery case to be emitted also from the negative terminal side. A nominal output voltage of the secondary battery cell 101 is 3.0 V to 4.2 V and an average nominal output voltage is 3.6 V.

FIG. 8 is an exploded perspective view illustrating the power storage module illustrated in FIG. 5.

The plurality of secondary battery cells 101 placed in the up-down direction are disposed in the holding case 111 such that central axes thereof extend in the left-right directions of the holding case 111.

More specifically, a plurality of the secondary battery cells 101 are arranged in a plurality of stages (in the present embodiment, five cells, four cells, and five cells are arranged in three stages, respectively). That is, the power storage modules 40A to 40C each have a configuration in which a secondary battery cell arrays 103 each constituted by the plurality of secondary battery cells 101 are layered in a plurality of stages in the holding case 111. FIG. 8 illustrates the configuration of the power storage module 40A or 40B. In the power storage module 40C, four cells are arranged in three stages, or five cells, four cells, and three cells are arranged in three stages, respectively.

In the holding case 111, a front-side secondary battery cell array 103F, a rear-side secondary battery cell array 103R, and an intermediate secondary battery cell array 103M are held. In the present embodiment, the front-side secondary battery cell array 103F and rear-side secondary battery cell array 103R are arranged in the same way; on the other hand, the intermediate secondary battery cell array 103M is displaced from the front-side secondary battery cell array 103F and rear-side secondary battery cell array 103R in the longitudinal (up-down) direction of the holding case 111 by a half piece of the secondary battery cell 101. That is, the front-side secondary battery cell array 103F, rear-side secondary battery cell array 103R, and intermediate secondary battery cell array 103M have the same arrangement pitch, and they are displaced from one another by a half pitch. By holding the front-side, intermediate, and rear-side arrays in a displaced manner in a column direction as described above, the secondary battery cell arrays of the adjacent stages can be brought close to each other, whereby a dimension in a direction perpendicular to the column direction can be reduced. Therefore, a length, i.e., a height of each of the power storage modules 40A to 40C can be reduced.

The holding case 111 is constituted by four members, a rear holding frame member 121, an intermediate holding frame member 131, an intermediate holding frame member 132, and a front holding frame member 141. The intermediate holding frame member 131 has an intermediate holding frame 131R at a side thereof opposite to the rear holding frame member 121 and has an intermediate holding frame 131F at a side thereof opposite to the intermediate holding frame member 132. The intermediate holding frame member 132 has an intermediate holding frame 132R at a side thereof opposite to the intermediate holding frame member 131 and has an intermediate holding frame 132F at a side thereof opposite to the front holding frame member 141.

The rear holding frame member 121, the intermediate holding frames 131R and 131F of the intermediate holding frame member 131, the intermediate holding frames 132R and 132F of the intermediate holding frame member 132, and front holding frame 141 each have semicircular concave portions 137 to be fitted to the cylindrical parts of the respective secondary battery cells 101.

The secondary battery cells 101 of the secondary battery cell array 103R are sandwiched and held between the rear holding frame member 121 and intermediate holding frame 131R of the intermediate holding frame member 131. The secondary battery cells 101 of the secondary battery cell array 103M are sandwiched and held between the intermediate holding frame 131F of the intermediate holding frame member 131 and intermediate holding frame 132R of the intermediate holding frame member 132. The secondary battery cells 101 of the secondary battery cell array 103F are sandwiched and held between the intermediate holding frame 132F of the intermediate holding frame member 132 and front holding frame member 141. The positive and negative electrodes of each of the secondary battery cells 101 held between the holding frame members are exposed outside from the concave portions 137, respectively.

The refrigerant introducing port 116 and refrigerant lead-out port 118 formed in the front and rear end surfaces 115a and 115b of the holding case 111 are each formed into a rectangular shape elongated in the up-down direction. That is, a straight line obtained by projecting upper sides of the refrigerant introducing port 116 and refrigerant lead-out port 118 onto the secondary battery cell arrays 103F, 103M, and 103R is projected onto peripheral surfaces of the uppermost secondary battery cells 101. Further, a straight line obtained by projecting lower sides of the refrigerant introducing port 116 and refrigerant lead-out port 118 onto the secondary battery cell arrays 103F, 103M, and 103R is projected onto peripheral surfaces of the lowermost secondary battery cells 101.

The secondary battery cells 101 constituting each of the secondary battery cell arrays 103F, 103M, and 103R are arranged with a gap provided between adjacent secondary battery cells 101 in each cell arrays. Further, the secondary battery cells 101 are held by the holding frame members with a gap provided between the adjacent cell arrays. That is, each secondary battery cell 101 arranged in the holding case 111 is held spaced from the adjacent secondary battery cell 101 of the same cell array and spaced from the secondary battery cell 101 of the adjacent stage. As a result, a cooling structure is achieved, in which refrigerant such as air introduced through the refrigerant introducing port 116 passes through among the secondary battery cells 101 while contacting and cooling the individual secondary battery cells 101 and is discharged outside through the refrigerant lead-out port 118.

The attachment 150 illustrated in FIG. 5 is disposed in front of each of the power storage modules 40A to 40C.

The attachment 150 is a plate-like member made of a metal, a resin, or a rubber. As illustrated in FIG. 9, the attachment 150 has a plurality of circulation openings 151 which are formed so as to correspond to the refrigerant introducing port 116. More in detail, the attachment 150 has a plurality of refrigerant introducing ports 116 arranged in the up-down direction of the refrigerant introducing port 116 and each having an area smaller than the refrigerant introducing port 116.

### [Attachment]

The above-described attachment, i.e., the refrigerant circulation control mechanism will be described more in detail.

FIG. 9 is an exemplary cross-sectional view illustrating an embodiment of the power storage device according to the present embodiment.

The power storage module 40 is housed in the storage case 2 of the power storage device 1, and the secondary battery cell arrays 103 each constituted by the plurality of secondary battery cells 101 are housed in a plurality of stages in the holding case 111 of the power storage module 40. Each secondary battery cell 101 is disposed spaced from the adjacent secondary battery cell 101 of the same stage and spaced from the secondary battery cell 101 of the secondary battery cell array 103 of the adjacent stage.

The inlet 22 is formed in the side cover 12 of the storage case 2, and the outlet 32 is formed in the side wall 31 of the storage case 2. The refrigerant introducing port 116 having an area substantially the same as that of the inlet 22 is formed in the front end surface 115a of the holding case 111 so as to correspond to the inlet 22. The refrigerant lead-out port 118 having an area substantially the same as that of the outlet 32 is formed in the rear end surface 115b of the holding case 111 so as to correspond to the outlet 32.

The attachment 150 is interposed between the side cover 12 and front end surface 115a of the holding case 111 of the power storage module 40. The attachment 150 has, within an area corresponding to the inlet 22 and refrigerant introducing port 116, a plurality of circulation openings 151 which are arranged at substantially equal intervals. Each circulation openings 151 communicates with the inlet 22 and refrigerant introducing port 116. Each circulation opening 151 has an area smaller than those of the inlet 22 and refrigerant introducing port 116.

Five circulation openings 151 are formed so as to correspond to five secondary battery cells 101 arranged in the secondary battery cell 103F. That is, one circulation opening 151 is provided for one secondary battery cell 101. For fixing, the attachment 150 may be fitted to the holding case 111, or may be bonded to one or both of the holding case 111 and side cover 12.

The circulation opening 151 of the attachment 150 has a function of controlling a refrigerant circulation state (flow rate, direction, flow velocity, etc.) of the refrigerant. Refrigerant such as air that has passed through the inlet 22 flows in the holding case 111 through the refrigerant introducing port 116 with the circulation state thereof controlled. The refrigerant that has passed through the inlet 22 is substantially equally distributed by the circulation openings 151 of the attachment 150, and the distributed refrigerant cools each secondary battery cell 101 such that the secondary battery cells 101 have an equal temperature. As described above, the refrigerant passes through the gap between the secondary battery cells 101 arranged in the holding case 111 and is led to the refrigerant lead-out port 118. Thus, a satisfactory refrigerant flow can be achieved to thereby obtain high cooling efficiency.

In the above cooling structure, when the number of stages of the secondary battery cell arrays 103 is made smaller than the number of the secondary battery cells 101 constituting each secondary battery cell array 103, a refrigerant flow path from the refrigerant introducing port 116 to refrigerant lead-out port 118 becomes short, which can advantageously increase cooling effect.

Although the attachment 150 is provided at the refrigerant introducing port 116 side in the above embodiment, the attachment 150 may be provided at the refrigerant lead-out port 118 side. Further, the attachment 150 may be provided at both the refrigerant introducing port 116 side and refrigerant lead-out port 118 side.

Further, although not illustrated, a seal member may be provided between the attachment 150 and each case member. Assuming that, for example, the attachment 150 is provided at the refrigerant introducing port 116 side, the seal member may be provided in one or both of spaces between the attachment 150 and side cover 12 and between the attachment 150 and the front end surface 115a of the holding case 111.

Although the refrigerant introducing port 116 and refrigerant lead-out port 118 have the same shape and area in the above embodiment, one or both of the shape and area thereof may be different. Further, although the refrigerant introducing port 116 and refrigerant lead-out port 118 are each formed as a single opening, one or both of them may be formed as a plurality of openings.

### [Modifications of Attachment]

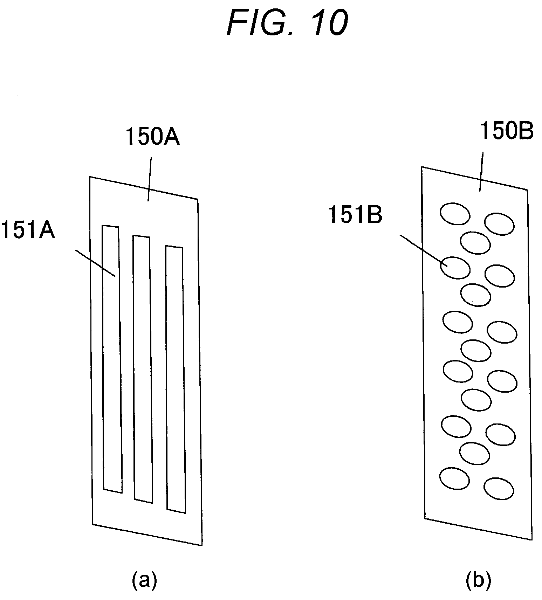

FIGS. 10(a) and 10(b) are views each illustrating a modification of the attachment.

An attachment 150A illustrated in FIG. 10(a) has circulation openings 151A each having a rectangular shape elongated in the up-down direction. In this modification, each circulation opening 151A is disposed over all the five secondary battery cells 101 constituting the secondary battery cell array 103F.

An attachment 150B illustrated in FIG. 10(b) has a number of elliptical circulation openings 151B. In the illustrated example, a laterally (left-right direction) arranged group constituted by two circulation openings 151B and a laterally (left-right direction) arranged group constituted by a single circulation opening 151B are alternately arranged in the up-down direction. However, the laterally arranged group may be constituted by the same number of circulation openings 151B.

The shape, arrangement, and area of the circulation openings 151A and 151B of the attachment 150A and 150B illustrated in FIGS. 10(a) and 10(b) are illustrative. The circulation opening 151 may have a circular shape, a hexagonal shape, or an octagonal shape. Further, different shapes may be combined. The arrangement, pitch, or area of the circulation openings 151 may be appropriately determined.

In short, it is only necessary for the circulation openings 151 to satisfy one of the following conditions (i) and (ii) :
(i) when the attachment 150 is disposed at the refrigerant introducing port 116 side, the number of the circulation openings 151 is larger than the number of the refrigerant introducing ports 116, and the area of each circulation opening 151 is smaller than the area of the refrigerant introducing port 116;
(ii) when the attachment 150 is disposed at the refrigerant lead-out port 118 side, the number of the circulation openings 151 is larger than the number of the refrigerant lead-out ports 118, and the area of each circulation opening 151 is smaller than the area of the refrigerant lead-out port 118.

As described above, according to the power storage device of the present embodiment, the following effects can be obtained.
(1) The attachment 150 having a plurality of circulation openings 151 each having an area smaller than the area of the refrigerant introducing port 116 or refrigerant lead-out port 118 is provided outside the refrigerant introducing port 116 or refrigerant lead-out port 118 of the power storage module 40.
   Refrigerant such as air is substantially equally distributed by the circulation openings 151 of the attachment 150 and cools individual secondary battery cells 101 constituting each of the secondary battery cell arrays 103 arranged in a plurality of stages such that the secondary battery cells 101 have an equal temperature. This reduces a temperature difference among the secondary battery cells 101, allowing easy maintenance of battery performance.
(2) The attachment 150 is provided outside the refrigerant introducing port 116 or refrigerant lead-out port 118 of the power storage module 40. When the attachment 150 is provided inside the power storage module 40 or when the attachment 150 is formed integrally with the power storage module 40, a change in the structure of the power storage module 40 in association with a difference in the internal structure of the power storage module 40, the number of the secondary battery cells 101 to be housed, and an installation location of the power storage module 40 may involve a need to change the attachment 150 correspondingly. The attachment 150 can be externally attached to the power storage module 40 so that it is possible to make the attachment 150 commonly usable among the different structures, whereby reduction in production cost and development cost and improvement in services such as maintenance can be expected.
(3) The attachment 150 is provided outside the refrigerant introducing port 116 or refrigerant lead-out port 118 of the power storage module 40, so that the attachment 150 can easily be fitted to the holding case 111, or can easily be bonded to one or both of the holding case 111 and side cover 12. That is, the attachment 150 can be mounted by a simple assembly work, whereby assembling workability can be improved.

### Second Embodiment

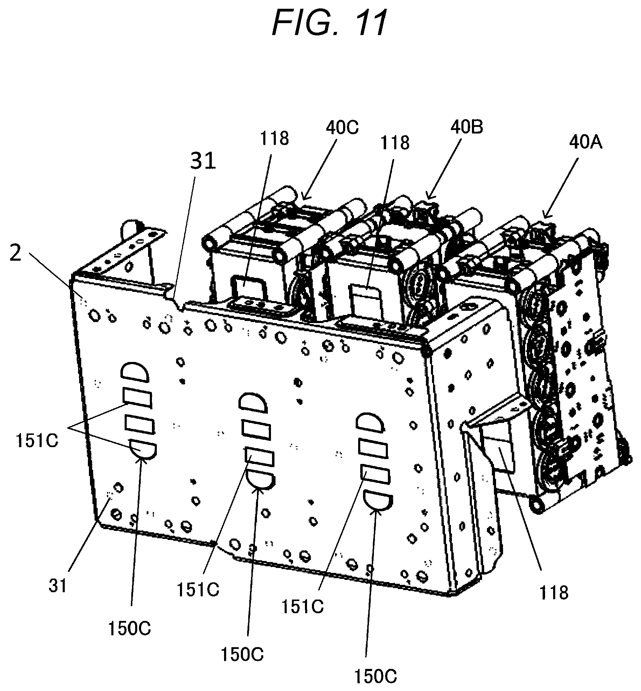

FIG. 11 is an exploded perspective view illustrating a main part of a second embodiment of a power storage device according to the present invention.

A power storage device 1 of the second embodiment has a feature in that the attachment 150 of the first embodiment is omitted, and that an opening 150C functioning as a refrigerant circulation control mechanism is formed in the side wall 31 of the storage case 2.

Three refrigerant circulation control mechanisms 150C are formed in the side wall 31 of the storage case 2 so as to correspond to the refrigerant lead-out ports 118 of the respective power storage modules 40A to 40C.

Each refrigerant circulation control mechanism 150C is constituted by a plurality of circulation openings 151C each having an area smaller than that of the refrigerant lead-out port 118.

According to the power storage device 1 of the second embodiment, the refrigerant circulation control mechanisms 150C are formed in the side wall 31 of the storage case 2, so that the same effect as that described in (1) of the first embodiment can be obtained. Further, the refrigerant circulation control mechanisms 150C are formed integrally with the storage case 2, so that assembling workability can be improved more than in the first embodiment.

In the second embodiment, the inlet 22 of the side cover 12 may be replaced by the refrigerant circulation control mechanisms 150C. In the configuration where the refrigerant circulation control mechanisms 150C are formed in the side cover 12, the refrigerant circulation control mechanisms 150C may be formed also in the side wall 31 of the main case 11.

Further, as in the first embodiment, the shape and area of the circulation openings 151C formed in each refrigerant circulation control mechanism 150C can appropriately be changed.

### Third Embodiment

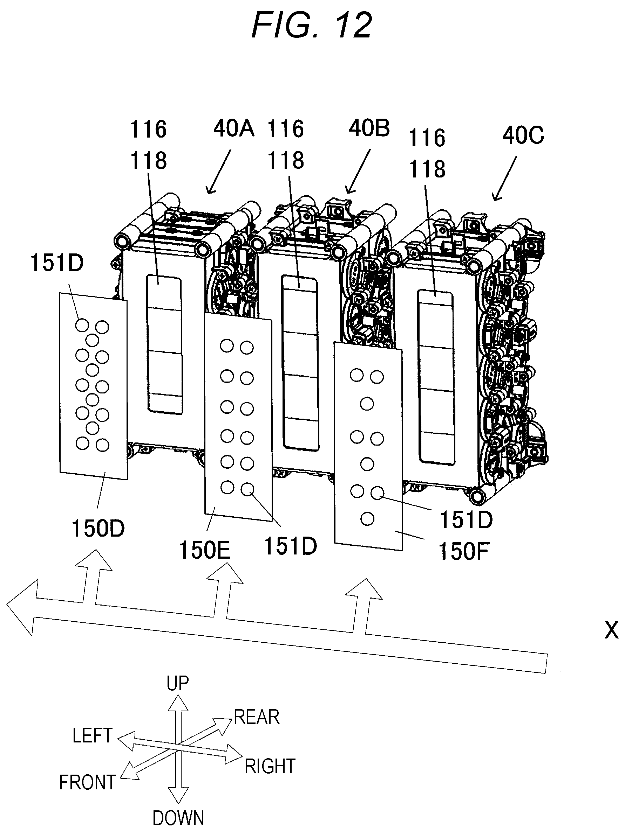

FIG. 12 is an exploded perspective view illustrating a main part of a third embodiment of a power storage device according to the present invention. In the drawing, a correspondence relation between the power storage modules 40A to 40C and attachments 150D to 150F fixed to the power storage modules 40A to 40C, respectively. Attachments 150D to 150F are provided so as to correspond respectively to the refrigerant introducing ports 116 and/or the refrigerant lead-out ports 118 of the power storage modules 40A to 40C. Circulation openings 151D are formed in each of the attachments 150D to 150F. Among the attachments 150D to 150F, the attachment 150D has the largest number of the circulation openings 151D, the attachment 150E has the second largest number of the circulation openings 151D, and the attachment 150F has the smallest number of the circulation openings 151D. In other words, the total area of the circulation openings 151D formed in the attachments 150D to 150F becomes smaller in the order of attachment 150D, attachment 150E, and attachment 150F. That is, a flow rate of the refrigerant passing through the circulation openings 151D of the attachments 150D to 150F becomes smaller in the order of attachment 150D, attachment 150E, and attachment 150F.

When the refrigerant flows to the power storage modules 40A to 40C in an illustrated X-direction, the flow rate of the refrigerant flowing around the attachments 150D to 150F is larger toward the upstream side. Thus, the flow rate of the refrigerant that has flowed through the attachments 150D to 150F is averaged. That is, the flow rates of the refrigerants flowing inside the respective power storage modules 40A to 40C are substantially the same, whereby cooling performance is equalized among the power storage modules 40A to 40C.

According to the third embodiment, the attachments 150D to 150F each having the circulation openings 151D are disposed so as to correspond to the power storage modules 40A to 40C, so that the same effects as the effects (1) to (3) of the first embodiment can be obtained. In addition, the following effect can be obtained.
(4) The total area of the circulation openings 151D is made different among the attachments 150D to 150F attached to the respective power storage modules 40A to 40C. Thus, it is possible to control the flow amount of the refrigerant flowing in the power storage modules 40A to 40C through the attachments 150D to 150F depending on a temperature around the power storage modules 40A to 40C, a duct position, or the like, thereby allowing a temperature difference among the secondary battery cells 101 in the power storage modules 40A to 40C to be reduced. That is, the temperature difference between the secondary battery cells 101 of different power storage modules 40 can be reduced.

As in the first and second embodiments, the shape and area of the circulation openings 151D can appropriately be changed. Further, the shape of the circulation openings 151D may be different among the attachments 150D to 150F in each of which the circulation openings 151D are formed.

### Fourth Embodiment

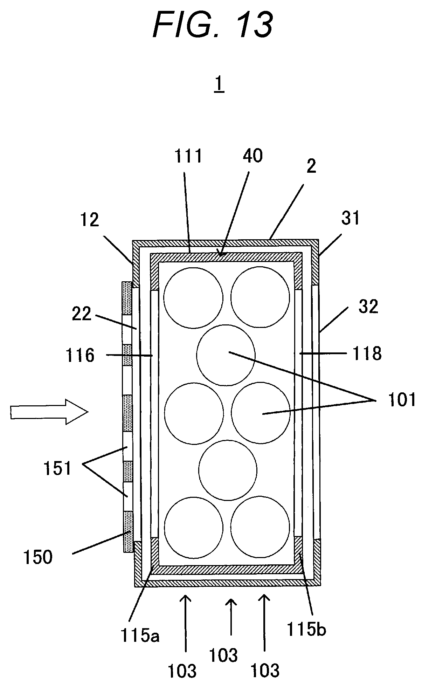

FIG. 13 is an exemplary cross-sectional view illustrating a fourth embodiment of a power storage device according to the present invention.

The fourth embodiment has a feature in that the attachment 150 is disposed outside the side cover 12 of the storage case 2.

The power storage module 40 is housed in the storage case 2 of the power storage device 1, and the secondary battery cell arrays 103 each constituted by the plurality of secondary battery cells 101 are housed in a plurality of stages in the holding case 111 of the power storage module 40. Each secondary battery cell 101 is disposed spaced from the adjacent secondary battery cell 101 of the same stage and spaced from the secondary battery cell 101 of the secondary battery cell array 103 of the adjacent stage.

The inlet 22 is formed in the side cover 12 of the storage case 2, and the outlet 32 is formed in the side wall 31 of the storage case 2. The refrigerant introducing port 116 having an area substantially the same as that of the inlet 22 is formed in the front end surface 115a of the holding case 111 so as to correspond to the inlet 22. The refrigerant lead-out port 118 having substantially the same area as that of the outlet 32 is formed in the rear end surface 115b of the holding case 111 so as to correspond to the outlet 32.

The attachment 150 is attached to an outside of the side cover 12 of the storage case 2. The attachment 150 has a plurality of circulation openings 151. The circulation openings 151 are formed within an area corresponding to the inlet 22 and refrigerant introducing port 116 and each communicate with the inlet 22 and refrigerant introducing port 116. Each circulation opening 151 has an area smaller than those of the inlet 22 and refrigerant introducing port 116. The attachment 150 may be fitted to or bonded to the side cover 12 for fixing.

The Refrigerant that has taken in through a not illustrated duct passes through the circulation openings 151 of the attachment 150, inlet 22, and refrigerant introducing port 116 and flows inside the power storage module 40. When passing through the circulation openings 151 of the attachment 150, the refrigerant is substantially equally distributed with the circulation state (flow rate, direction, flow velocity, etc.) thereof controlled and equally cools the secondary battery cells 101 arranged in the power storage module 40. Then, the refrigerant passes through the gap between the secondary battery cells 101 arranged in the holding case 111 and is led to the refrigerant lead-out port 118. Thus, high cooling efficiency can be obtained.

Also in the fourth embodiment, presence of the attachment 150 (at the outside of the power storage case 2) allows the same effects as those described in (1) and (2) of the first embodiment to be obtained. Further, the attachment 150 can easily be fitted to or bonded to the storage case 2, whereby assembling workability can be improved.

In the above cooling structure, when the number of stages of the secondary battery cell arrays 103 is made smaller than the number of the secondary battery cells 101 constituting each secondary battery cell array 103, a refrigerant flow path from the refrigerant introducing port 116 to refrigerant lead-out port 118 becomes short, which can advantageously increase cooling effect.

Although the attachment 150 is provided at the refrigerant introducing port 116 side in the above embodiment, the attachment 150 may be provided at the refrigerant lead-out port 118 side. Further, the attachment 150 may be provided at both the refrigerant introducing port 116 side and refrigerant lead-out port 118 side.

Although the refrigerant introducing port 116 and refrigerant lead-out port 118 have the same shape and area in the above embodiment, one or both of the shape and area thereof may be different. Further, although the refrigerant introducing port 116 and refrigerant lead-out port 118 are each formed as a single opening, one or both of them may be formed as a plurality of openings.

Further, although not illustrated, a seal member may be provided between the attachment 150 and side cover 12.

The present invention is applicable not only to a power storage device provided with the lithium-ion secondary battery, but also to a power storage device provided with a secondary battery using a water-soluble electrolyte, such as a nickel hydride battery, a nickel-cadmium battery, or a lead storage battery. Further, the present invention is applicable to a power storage device provided with a power storage element such as a lithium-ion capacitor or an electrolytic double-layer capacitor.

In the above respective embodiments, although air is exemplified as the refrigerant, the refrigerant to be used may be gas other than the air. Further, the refrigerant need not be gas, but may be liquid.

The power storage device of the present invention may be variously modified within the spirit of the invention. That is, the power storage device of the present invention may be configured as follows: the plurality of secondary battery cells are arranged in a plurality of stages in the storage module case; the refrigerant introducing port and refrigerant lead-out port opposed to each other in a longitudinal direction of the secondary battery cells in the storage module case are provided; the refrigerant control mechanism is provided at the outside of at least one of the refrigerant introducing port and refrigerant lead-out port; and the plurality of circulation openings each of which has an area smaller than those of the refrigerant introducing port and refrigerant lead-out port and whose number is larger than those of the refrigerant introducing port and refrigerant lead-out port are formed in the refrigerant control mechanism.

### Reference Signs List

1 power storage device
2 storage case
22 inlet (inflow port)
32 outlet (outflow port)
40, 40A, 40B, 40C power storage module
101 secondary battery cell (power storage element)
111 holding case (storage module case)
116 refrigerant introducing port
118 refrigerant lead-out
150, 150A to 150F attachment (refrigerant circulation control mechanism)
151, 151A to 151D circulation opening

## Claims

1. A power storage device comprising:
a power storage module having a storage module case and a plurality of power storage elements arranged, in the storage module case, in a plurality of stages each including a plurality of the power storage elements, the storage module case having a refrigerant introducing port formed at one of a pair of side portions arranged in a longitudinal direction of the power storage elements and a refrigerant lead-out port at the other one of the pair of side portions;
a storage case housing the power storage module and having an inlet communicating with the refrigerant introducing port and an outlet communicating with the refrigerant lead-out port; and
a refrigerant control mechanism disposed at an outside of at least one of the pair of side portions of the storage module case in which the refrigerant introducing port is formed and the other one of the pair of side portions in which the refrigerant lead-out port is formed, wherein the refrigerant control mechanism satisfies one of the following conditions (i) and (ii):
(i) when being disposed outside the refrigerant introducing port, the refrigerant control mechanism has circulation openings whose number is larger than the number of the refrigerant introducing ports, and an area of each circulation openings is smaller than the area of the refrigerant introducing port;
(ii) when being disposed outside the refrigerant lead-out port, the refrigerant control mechanism has circulation openings whose number is larger than the number of the refrigerant lead-out ports, and an area of each circulation openings is smaller than the area of the refrigerant lead-out port.

2. The power storage device according to claim 1, wherein the number of stages of the power storage elements arranged in the storage module case is smaller than the number of power storage devices arranged in each stage.

3. The power storage device according to claim 2, wherein the refrigerant control mechanism is a plate-like member disposed between the storage module case and storage case.

4. The power storage device according to claim 2, wherein the refrigerant control mechanism is a plate-like member disposed outside the storage case.

5. The power storage device according to claim 3 or claim 4, wherein the circulation openings of the refrigerant circulation control mechanism satisfy one of the following conditions (i) and (ii):
(i) when the refrigerant control mechanism is disposed outside the refrigerant introducing port, the number of the circulation openings is larger than the number of the inlets, and an area of each circulation opening is smaller than the area of the inlet;
(ii) when the refrigerant control mechanism is disposed outside the refrigerant lead-out port, the number of the circulation openings is larger than the number of the outlets, and an area of each circulation opening is smaller than the area of the outlet.

6. The power storage device according to claim 2, wherein the refrigerant circulation control mechanism is formed in the storage case.

7. The power storage device according to claim 1, wherein the power storage element is a cylindrical secondary battery cell.

8. The power storage device according to claim 7, wherein at least one circulation opening is disposed so as to correspond to each of the plurality of power storage elements arranged in one stage.

9. The power storage device according to claim 7, wherein each circulation opening is disposed over the plurality of power storage elements arranged in one stage.

10. The power storage device according to claim 1, wherein the plurality of power storage modules are provided inside the storage case, and the refrigerant circulation control mechanism is provided for each of the plurality of power storage modules, and
at least one of a shape, an area, and an arrangement of the circulation openings of at least one refrigerant circulation control mechanism is different from those of the circulation openings of another refrigerant circulation control mechanism.

11. The power storage device according to claim 10, wherein the storage case has an inlet or an outlet of refrigerant, and
a total area of the circulation openings of the refrigerant circulation control mechanism housed at a location close to the inlet side or outlet side is smaller than a total area of the circulation openings of the refrigerant circulation control mechanism housed at a location distant from the inlet side or outlet side.
